# EUROPÄISCHE PATENTSCHRIFT

(11) **EP 2 222 687 B1**
(45) Veröffentlichungstag und Bekanntmachung des Hinweises auf die Patenterteilung: **26.09.2012**
(21) Anmeldenummer: 08868790.0
(22) Anmeldetag: 01.12.2008
(51) Int. Cl.: C07F 7/04, C07F 7/00, C08L 61/06, C08G 8/28

(54) **SPIROVERBINDUNGEN**
SPIRO COMPOUNDS
COMPOSÉS SPIRANIQUES

(30) Priorität: 27.12.2007 DE 102007063284
(43) Veröffentlichungstag der Anmeldung: 01.09.2010
(73) Patentinhaber: BASF SE, 67056 Ludwigshafen (DE)
(72) Erfinder: KOCH, Matthias, DE/65207 Wiesbaden (DE); SPANGE, Stefan, 07768 Orlamuende (DE); LANGE, Arno, 67098 Bad Dürkheim (DE); HAEHNLE, Hans, Joachim, 67435 Neustadt (DE); DYLLICK-BRENZINGER, Rainer, 67435 Neustadt (DE); HANEFELD, Phillip, 69115 Heidelberg (DE); SCHROEDER, Marc, Canton, MI 48188 (US); GUBAYDULLIN, Illshat, 67061 Ludwigshafen (DE)
(86) Internationale Anmeldenummer: PCT/EP2008/010169
(87) Internationale Veröffentlichungsnummer: WO 2009/083083

(56) Entgegenhaltungen:
- DATABASE CA [Online] CHEMICAL ABSTRACTS SERVICE, COLUMBUS, OHIO, US; MEHROTRA, R. C. ET AL: "Reactions of titanium and zirconium alkoxides with salicylaldehyde" XP002517484 gefunden im STN Database accession no. 79:152463 & INDIAN JOURNAL OF CHEMISTRY , 11(8), 814-16 CODEN: IJOCAP; ISSN: 0019-5103, 1973,
- GRUND, S. ET AL.: "Zwillingspolymerisation: ein Weg zur Synthese von Nanokompositen" ANGEWANDTE CHEMIE, Bd. 119, 2007, Seiten 636-640, XP002517483 in der Anmeldung erwähnt

## Beschreibung

Die Erfindung betrifft Spiroverbindungen der Formel I sowie durch Zwillingsringöffnungspolymerisation hergestellte Komposite, poröse Metall- oder Halbmetalloxidmaterialien, die vorzugsweise monolithisch vorliegen, und sich unter anderem für die Trägerung von Katalysatoren eignen.

Der Begriff "Monolith" bedeutet, dass der Hauptteil des Materials als ein zusammenhängendes Stück vorliegt, dessen Abmaße über denen üblicher Granulatteilchen liegen.

Der Begriff Metall- oder Halbmetalloxid umfasst dabei sowohl Metall- oder Halbmetalloxide im eigentlichen Sinne als auch Oxide, welche zusätzlich noch Metall- oder Halbmetallhydroxide enthalten (gemischte Oxide/Hydroxide).

Die kationische Polymerisation von Tetrafurfuryloxysilan (TFOS) wie in der US 2,276,094 beschrieben ergibt in nur einem Schritt ein Nanokomposit bestehend aus interpenetrierend vernetzten Polyfurfurylalkohol und Kieselgel (siehe Spange et al. Angew. Chem. 2007, 119, 636-640). Aufgrund der Bildung von zwei Polymeren aus einem Monomer wurde für diesen neuen Polymerisationstyp die Klassifizierung "Zwillingspolymerisation" vorgeschlagen. (siehe Spange et al. Angew. Chem. 2007, 119, 636-640). Diese Klassifizierung ist für das von Spange et al. vorgestellte Beispiel jedoch sehr allgemein, denn es handelt sich um eine spezielle Kondensationspolymerisation , denn als Kondensationsprodukt entsteht Wasser, was sich aufgrund möglicher Nebenreaktionen hervorgerufen durch Hydrolyse und als abzutrennende Komponente störend bemerkbar machen kann. Vor allem wenn andere Elemente des Periodensystems wie Aluminium oder Titan in Monomerkombinationen eingesetzt werden, ist die hydrolytische Wirkung des Wassers nicht mehr zu vernachlässigen und führt simultan oder dominierend zu konventionellen Sol-Gel-Prozesserscheinungen (siehe C.J. Brinker et al. Sol-gel science: the physics and chemistry of sol-gel processing, 6. Aufl. Academic Press, San Diego, 1995*)*

Weiterhin sind Furanderivate sehr reaktiv, wodurch Nebenreaktionen, insbesondere eine Oxidation, erleichtert werden, was die gezielte technische Anwendung solcher Derivate erschwert. Polyfuranharze sind daher oft inhomogen, extrem spröde und gefärbt, oft sogar schwarz, was viele Applikationen ausschließt. Aufgabe der vorliegenden Erfindung war es daher, die bekannte Zwillingskondensationspolymerisation ausgehend von TFOS und Difurfuryloxydimethylsilans (DFS) so weiter zu entwickeln, dass sie zu einheitlichen Prozessen ohne Nebenreaktionen führt, im Verlauf der Polymerisation keine störenden Substanzen wie Wasser abspalten werden und dass sie zu einheitlichen, farblosen oder nur gering gefärbten Nanokompositen führt.

Die vorliegende Aufgabe wird überraschenderweise dadurch gelöst, in dem durch eine "Zwillingsringöffnungspolymerisation" einer Metall- oder Halbmetall-Spiroverbindung wie beispielsweise 2,2'-Spirobi[4H-1,3,2-benzodioxasilin] (abgekürzt SPISI) Komposite hergestellt werden. Diese Komposite besitzen z.B. zwei bikontinuierliche, homogene und nanostrukturierte Phasen aus Silica und Phenolharz, die sich ohne Verlust der monolithischen Struktur durch Oxidation der organischen Phase in einen oxidischen Monolithen überführen lassen. Ebenso kann durch Ätzen die Silicaphase herausgelöst und so ein kontinuierlicher, poröser organischer Harzkörper erzeugt werden. Weiterhin sind die nach dem erfinderischen Verfahren erhaltenen Komposite bei geeigneter Reaktionsführung nicht oder nur gering gefärbt und transparent.

Gegenstand der vorliegenden Erfindung sind somit Spiroverbindungen der Formel I 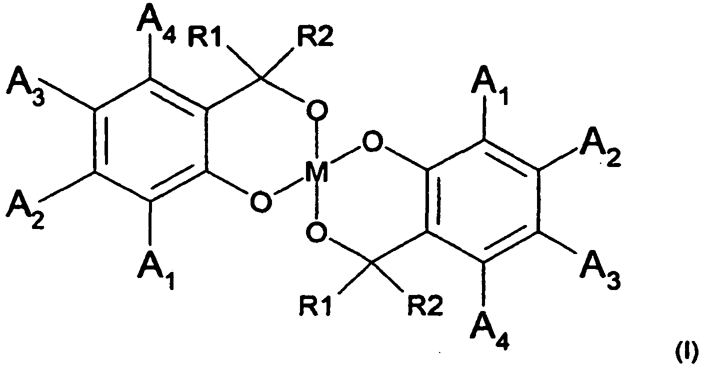 wobei
- M: ein Metall oder Halbmetall, vorzugsweise Si, Ti, Zr oder Hf, besonders bevorzugt Si oder Ti
- A₁, A₂, A₃, A₄: unabhängig voneinander Wasserstoff oder lineare oder verzweigte, aliphatische Kohlenwasserstoffreste, aromatische Kohlenwasserstoffreste oder aromatisch-aliphatische Kohlenwasserstoffreste,
- R₁, R₂: unabhängig voneinander Wasserstoff oder eine Alkylgruppe mit 1 bis 6 Kohlenstoffatomen, vorzugsweise Methyl oder H ist.

Bevorzugt sind zwei oder mehr als zwei der Reste A₁ bis A₄ untereinander verknüpft, insbesondere annelliert, d.h. zu einem gemeinsamen aromatischen Ringsystem verknüpft.

Weiterhin bevorzugt ist es, wenn ein oder mehrere Kohlenstoffatome der Reste A₁ bis A₄ unabhängig voneinander durch Heteroatome ersetzt sind, insbesondere durch Sauerstoff, Schwefel und/oder Stickstoff. Außerdem bevorzugt ist es, wenn A₁ bis A₄ unabhängig voneinander ein oder mehrere funktionelle Gruppen enthalten. Als funktionelle Gruppen kommen insbesondere folgende Gruppen in Betracht: Halogen, insbesondere Brom, Chlor oder auch -CN und -NR₂, wobei R insbesondere Wasserstoff oder ein aliphatischer oder aromatischer Kohlenwasserstoffrest ist, vorzugsweise H, Methyl, Ethyl oder Phenyl.

Weiterhin erfindungsgemäß bevorzugt sind die Reste R₁ und R₂ unabhängig voneinander Wasserstoff oder eine Alkylgruppe mit 1 bis 6 Kohlenstoffatomen. Vorzugsweise wird R₁ und R₂ ausgewählt aus Wasserstoff (H) und Methyl. Besonders bevorzugt ist R₁ und R₂ gleich H. Außerdem besonders bevorzugt ist zumindest einer der beiden Reste A₁ und A₃ ein Wasserstoffatom. In einer ganz besonders bevorzugten Ausführungsform ist sowohl A₁ als auch A₃ ein Wasserstoffatom. Außerdem ganz besonders bevorzugt ist A₁ bis A₄ gleich H.

Am bevorzugtesten ist die Verbindung 2,2'-Spirobi[4H-1,3,2-benzodioxasilin].

Ein weiterer Gegenstand der vorliegenden Erfindung ist ein anorganisch-organisches Hybridmaterial (Komposit) erhältlich durch Polymerisation, vorzugsweise durch Zwillingsringöffnungspolymerisation, einer oder mehrerer Monomerbausteine ausgewählt aus der Gruppe der Spiroverbindungen der allgemeinen Formel I 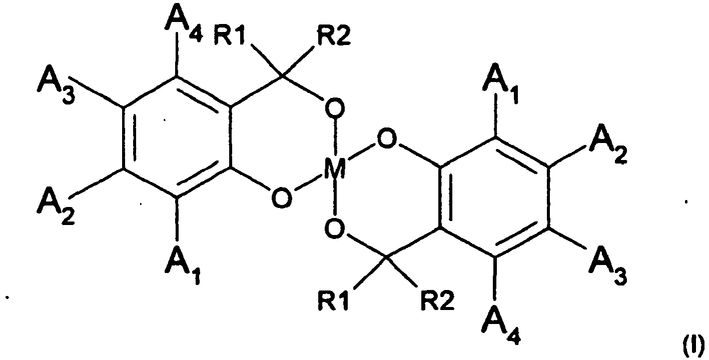 wobei A₁ und A₃ gleich H bedeutet und/oder Verbindungen der allgemeinen Formel **II** 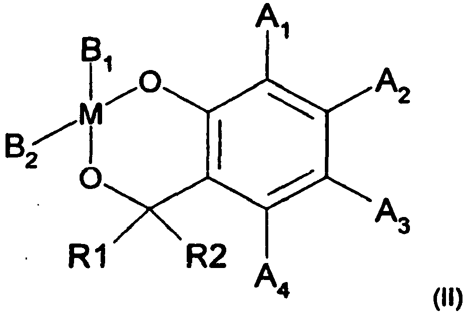 wobei
- B1 und B2: unabhängig voneinander lineare oder verzweigte aliphatische oder aromatische Kohlenwasserstoffreste sind, die Heteroatome, vorzugsweise Sauerstoff, Stickstoff oder Schwefel enthalten können, wobei zwischen den Gruppen B1 und B2 Ringschlüsse über einen oder mehrere Kohlenstoff- oder Heteroatome bestehen können.
und M, A₁, A₂, A₃, A₄, R₁, R₂, die oben angegebenen Bedeutungen haben, wobei A₁ und A₃ gleich Wasserstoff ist.

Diese Komposite können beispielsweise als Werkstoffe mit hoher Temperaturbeständigkeit und Festigkeit eingesetzt werden.

Ein weiterer Gegenstand der vorliegenden Erfindung ist ein poröser oxidischer Monolith erhältlich aus einem anorganisch-organischen Hybridmaterial durch kationische Polymerisation, vorzugsweise durch eine Zwillingsringöffnungspolymerisation, bei dem die organische Phase vollständig entfernt, vorzugsweise oxidiert, wird. Diese porösen, stabilen, anorganischen Monolithe eignen sich beispielsweise als Katalysatorträger.

Als "oxidischer Monolith" ist erfindungsgemäß ein Monolith definiert, der aus einem oder mehreren Metall- oder Halbmetalloxiden besteht und wie weiter oben beschrieben noch Metall- oder Haibmetallhydroxide enthalten kann.

Ein weiterer Gegenstand der vorliegenden Erfindung ist ein poröser organischer Harzkörper, erhältlich aus einem anorganisch-organischen Hybridmaterial durch kationische Polymerisation, vorzugsweise durch eine Zwillingsringöffnungspolymerisation, bei dem die anorganische Phase vollständig entfernt wird, vorzugsweise durch Herauslösen oder -ätzen. Als Lösungs- oder Ätzmittel kommen vorzugsweise solche Mittel, insbesondere Säuren, in Betracht, welche die anorganische Phase vollständig lösen oder chemisch verändern, ohne die organische Phase zu beeinträchtigen.

Diese porösen, stabilen, organischen Harze eignen sich beispielsweise als Katalysatorträger oder als Träger für Wirksubstanzen wie Pharmaka oder Pflanzenschutzmittel.

Charakteristisch für den Verlauf der Zwillingspolymerisation ist, dass sich zwei verschiedene Makromoleküle simultan bilden. Die Wachstumsschritte beider Polymere sind kinetisch gekoppelt, so dass die Bildung des ersten Polymers auf der gleichen Zeitskala wie die des zweiten Polymers erfolgt. Damit unterscheidet sich die Zwillingspolymerisation von organisch-anorganischen Hybridmonomeren eindeutig von bereits bekannten Prozessen, wie der Simultanpolymerisation, bei der zwei verschiedene Monomere in einem System gleichzeitig polymerisiert werden, oder der konsekutiven Polymerisation, wo zusammengesetzte Monomere (Muttermonomere) nach zwei verschiedenen Mechanismen oft nacheinander polymerisiert werden. Erfindungsgemäß werden zwei Typen von Zwillingspolymerisationen unterschieden:
- Hybridmonomere ohne Ringäquivalente müssen, auch wenn sie zwei Polymerstrukturen in einem Prozess liefern, zusätzlich ein weiteres niedermolekulares Kondensationsprodukt, wie zum Beispiel Wasser, bilden. Somit handelt es sich bei dieser Reaktion um eine Kondensationspolymerisation.
- Bei der erfindungsgemäßen Zwillingspolymerisation werden Monomere mit Ringäquivalenten eingesetzt, die im Rahmen einer Ringöffnungspolymerisation zwei Polymere in einem Prozess bilden können, ohne dass niedermolekulare Produkte gebildet werden. Dies wird zum Beispiel bei der ringöffnenden, kationischen Polymerisation von Spiro-Siliziumverbindungen beobachtet.

Die Zwillingspolymerisation von gezielt konzipierten Monomeren, bestehend aus zwei verschiedenen, kovalent verknüpften Bausteinen (Hybridmonomere) führt in nur einem Prozessschritt zur gleichzeitigen Bildung von zwei unterschiedlichen Polymeren. Erfindungsgemäß entscheidend ist, dass zwei unterschiedliche, makromolekulare Strukturen simultan in einem Prozess gebildet werden. Dabei können die beiden entstehenden Polymere jeweils lineare, verzweigte oder vernetzte Strukturen bilden. Die molekulare Zusammensetzung des Hybridmonomers definiert den theoretischen Vernetzungsgrad. Bilden sich gleichzeitig zwei vernetzte Polymerstrukturen, wird die Längenskala der jeweiligen Komponente im Komposit von der Molekülgröße des Monomerbausteines und von Diffusionsprozessen bestimmt. Mit dieser neuen Polymerisationsmethode können somit auch nanostrukturierte Komposite auf der Längenskala von 0.5 nm bis 2 nm für verschiedenste Materialklassen entwickelt werden, wo templatassistierte Verfahren unter Verwendung von organischen Polymeren an die intrinsische Grenze stoßen. Damit schließt die erfindungsgemäße Polymerisationsmethode die Lücke in der Längenskala zwischen Molekül und typischer Nanostruktur < 2nm.

Wie vorher schon erwähnt, wird die vorteilhafte bikontinuierliche Struktur aus anorganischer und organischer Phase des Hybridmateriales bereits durch Verwendung eines einzelnen Eduktes, aus welchem beide Phasen gleichzeitig entstehen, erreicht. Die Phasen separieren während der Polymerisation, ohne dass es zur makroskopisch sichtbaren Ausfällung eines Reaktionsproduktes kommt. Vielmehr geschieht die Separation auf einer Längenskala im Nanometerbereich. Beide Phasen, die sich bei der Polymerisation bilden, durchdringen sich vollständig und kontinuierlich. Die Ausbildung isolierter Domänen kann bei korrekter Reaktionsführung nicht beobachtet werden.

Mit neuartigen Spiroverbindungen der allgemeinen Formel I und/oder Verbindungen der allgemeinen Formel II mit den vorher definierten Resten oder Kombinationen aus beiden Formeln wird die Bildung eines niedermolekularen Abspaltungsproduktes während der Reaktion umgangen.

Die entstehenden Hybridmaterialien zeichnen sich durch eine sehr homogene Verteilung der beiden Phasen aus. Die Transparenz der entstehenden Monolithe deutet darauf hin, dass keine makroskopischen Domänen einer der beiden Phasen bei der Reaktion entstehen.

Dabei ist auch die Wahl eines geeigneten aciden Katalysators entscheidend für den optimalen Reaktionsverlauf der Polymerisation.

Bevorzugt werden hier Säuren wie z.B. Trifluoressigsäure oder Methansulfonsäure eingesetzt. Schwächere Protonsäuren wie Trifluoressigsäure, die besonders bevorzugt ist, führen zu einer verlangsamten Polymerisations-Reaktion, wodurch transparente Komposite entstehen (siehe Tabelle 1). Hingegen führen stärker acide Katalysatoren oft zu unkontrollierbar schnell verlaufenden Reaktionen.

Ein weiterer Gegenstand der Erfindung ist ein Verfahren zur Herstellung von anorganisch-organischem Hybridmaterial durch Polymerisation einer oder mehrerer Monomerbausteine ausgewählt aus der Gruppe der Spiroverbindungen der allgemeinen Formel I und/oder Verbindungen der allgemeinen Formel II wie oben angegeben

Für die Bildung des anorganisch-organischen Hybridmaterials ist es bevorzugt, dass A1 und A3 in Formel I und gegebenenfalls Formel II Wasserstoff (H) sind, insbesondere A1 bis A4 gleich H. Die Wasserstoffatome als Substituenten A1 und A3 stellen reaktive Gruppen im Sinne der Polymerisationsreaktion dar.

Ein weiterer Gegenstand der Erfindung ist somit ein Verfahren zur Herstellung von oxidischen Monolithen umfassend die Stufen:
a) Herstellen eines Hybridmaterials durch Polymerisation einer oder mehrerer Monomerbausteine ausgewählt aus der Gruppe der Spiroverbindungen der allgemeinen Formel I und/oder Verbindungen der allgemeinen Formel II wie oben definiert
b) Vollständiges Entfernen der organischen Phase, bevorzugt durch Oxidation, um einen oxidischen Monolithen zu erhalten.

Ein weiterer Gegenstand der Erfindung ist außerdem ein Verfahren zur Herstellung von porösen organischen Harzkörpern umfassend die Stufe a) wie weiter oben im Rahmen des Verfahrens zur Herstellung von oxidischen Monolithen beschrieben sowie die Stufe:

Herstellen eines Hybridmaterials durch Polymerisation einer oder mehrerer Monomerbausteine wie vorstehend unter a) beschrieben und vollständige Entfernung der anorganischen Phase, vorzugsweise durch Ätzen.

Ein weiterer Gegenstand der vorliegenden Erfindung ist ein Verfahren zur Herstellung von Spiroverbindungen der Formel I, dadurch gekennzeichnet, dass eine Verbindung der Formel III 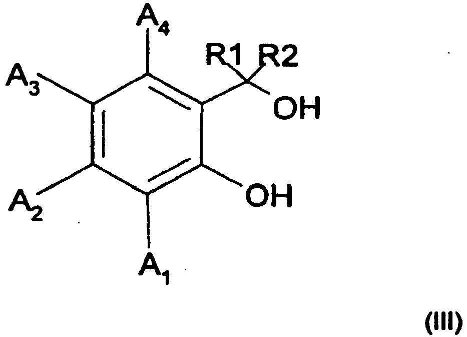 wobei A₁, A₂, A₃, A₄, R₁, R₂ die oben genannten Bedeutungen haben, wobei A₁ und A₃ gleich H ist, mit mindestens einer Alkoxy- und/oder Halogenverbindung der Elemente Si, Ti, Zr oder Hf umgesetzt wird.

Erfindungsgemäß bevorzugt werden als Halogenverbindung SiCl₄ und als Alkylverbindung Tetraalkylorthosilikate oder Tetraalkyltitanate eingesetzt. Besonders bevorzugt sind Tetramethylorthosilikat (TMOS) und Tetraethylorthosilikat sowie Tetraisopropyltitanat.

Beim Einsatz von SiCl₄ wird Triethylamin als Hilfsbase verwendet. Das entstehende voluminöse Ammoniumsalz kann sich allerdings als Hindernis bei der Aufarbeitung darstellen, so dass der Einsatz der Tetraalkyl-Verbindungen noch bevorzugter ist.

Weiterhin betrifft die Erfindung die Verwendung von Spiroverbindungen der Formel I und/oder II zur Herstellung von oxidischen Monolithen als Katalysatorträger.

Ein weiterer Gegenstand der Erfindung ist die Verwendung der anorganischen bzw. oxidischen Monolithen als Katalysatorträger. Hierbei werden Metalle, Oxide oder Komplexverbindungen entweder auf der porösen Oberfläche adsorbiert, oder chemisch auf ihr gebunden. Das günstige Oberfläche-zu-Volumen-Verhältnis erlaubt eine große Katalysatormenge pro Volumen, die Transportporen einen guten Stofftransport zu den aktiven Zentren und die monolithische Struktur eine einfache Handhabung.

Weiterhin betrifft die Erfindung die Verwendung von Spiroverbindungen der Formel I und/oder II zur Herstellung von porösen organischen Harzen als Katalysatorträger oder Träger für Wirkstoffe wie Pharmaka oder Pflanzenschutzmittel.

Ein weiterer Gegenstand der Erfindung ist die Verwendung der organischen porösen Harze als Katalysatorträger oder Träger für Wirkstoffe. Als Katalysatorträger werden Metalle, Oxide oder Komplexverbindungen entweder auf der porösen Oberfläche adsorbiert oder chemisch auf ihr gebunden. Das günstige Oberfläche-zu-Volumen-Verhältnis erlaubt eine große Katalysatormenge pro Volumen, die Transportporen einen guten Stofftransport zu den aktiven Zentren.

Zur Trägerung werden Wirkstoffe in den Poren adsorbiert und über die Zeit oder über Umgebungsvariable gesteuert freigesetzt. Dadurch ist es möglich, Wirkstoffe über einen Zeitraum oder am gewünschten Wirkort freizusetzen.

Weiterhin betrifft die Erfindung die Verwendung von Spiroverbindungen der Formel I und/oder II zur Herstellung von Werkstoffen, insbesondere solche mit hoher Temperaturbeständigkeit und Festigkeit.

Ein weiterer Gegenstand der Erfindung ist die Verwendung der Komposite als Werkstoffe, insbesondere solche mit hoher Temperaturbeständigkeit und Festigkeit.

Die folgenden Beispiele sollen die vorliegende Erfindung verdeutlichen. Sie sind jedoch keinesfalls als limitierend zu betrachten. Alle Verbindungen oder Komponenten, die in den Zubereitungen verwendet werden können, sind entweder bekannt und käuflich erhältlich oder können nach bekannten Methoden synthetisiert werden. Die in den Beispielen angegebenen Temperaturen gelten immer in ° C. Es versteht sich weiterhin von selbst, dass sich sowohl in der Beschreibung als auch in den Beispielen die zugegebenen Mengen der Komponenten in den Zusammensetzungen immer zu insgesamt 100% addieren. Gegebene Prozentangaben sind immer im gegebenen Zusammenhang zu sehen. Sie beziehen sich üblicherweise aber immer auf die Masse der angegebenen Teil- oder Gesamtmenge. Toluol und Dichlormethan wurden getrocknet.

### Beispiele

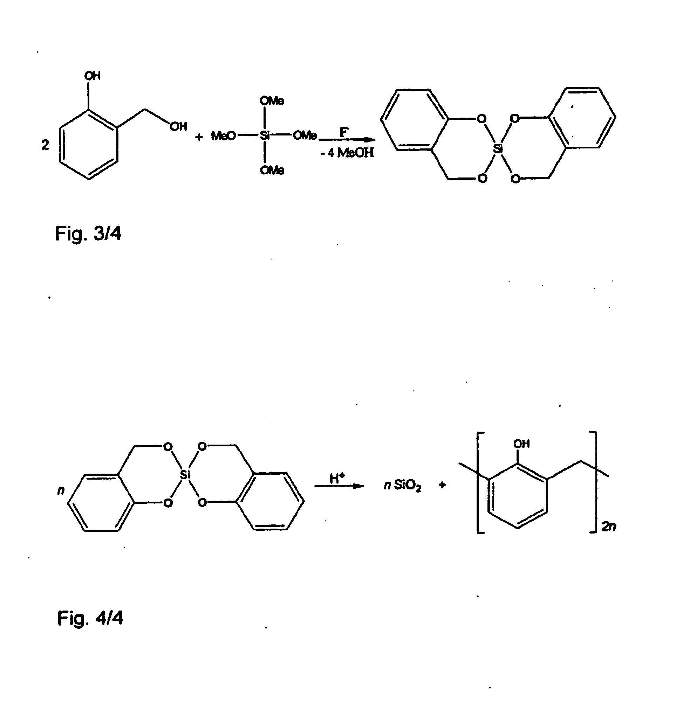

### Beispiel 1: Herstellung von 2,2'-Spirobi[4H-1,3,2-benzodioxasilin] (SPISI) (siehe Fig. 3)

135.77 g Salicylalkohol (1.0937 mol) wurde in Toluol bei 85 °C gelöst. Anschließend wurde 83.24g (0.5469 mol) Tetramethoxysilan (TMOS) langsam zugetropft, wobei nach Zugabe eines Drittels an TMOS 0.3 mL Tetra-n-butylammoniumfluorid (1M in THF) auf einmal eingespritzt wurde. Nach einer Stunde rühren bei 85 °C wurde das Azeotrop Methanol/Toutuol (63.7 °C) abdestilliert. Das restliche Toluol wurde am Rotationsverdampfer abgetrennt. Das Produkt wurde aus dem erhaltenen Reaktionssumpf mit Hexan bei ≈ 70 °C herausgelöst und nach Abkühlen die klare Lösung abdekantiert. Nach Entfernung des Hexans bleibt ein weißer Feststoff zurück. Das Produkt kann durch Umfällen mit Hexan weiter von Verunreinigungen gereinigt werden.
¹H-NMR 400 MHz, CDCl₃, 25°C, TMS) δ [ppm] = 5.21 (m, 4H,CH₂), 6.97-7.05 (m, 6H), 7.21-7.27 (M, 2H).
¹³C-NMR (100 MHz, CDCl₃, 25 °C): 8 [ppm] = 66.3 (CH₂), 119.3, 122.3, 125.2, 125.7, 129.1, 152.4.
²⁹Si-CP-MAS (79.5 MHz): δ [ppm] = - 78.4

### Beispiel 2: Kationische Polymerisation (Zwillingspolymorisation) von 2,2'-Spirobi[4H-1,3,2-benzodioxasilin] zum Phenolharz/ Silica-Nanokomposit (siehe Fig. 4)

Das nach Beispiel 1 hergestellte Monomer wird unter Argon bei 80° C geschmolzen bzw. in Chloroform bei 25°C gelöst. Der Initiator Trifluoressigsäure wird unter Rühren zugetropft und das Reaktionsgemisch weitere 3 h bei gleicher Temperatur gerührt und anschließend bei 25°C stehengelassen. Die Bildung der SiO₂-Phase und des Phenolharzes wird durch Festkörper-NMR-Spektroskopie zweifelsfrei belegt.

### Beispiel 3: Oxidation zu nanoporösem Silica

Die Kompositmonolithe werden unter Luftzufuhr mit 2K/min auf 900°C erhitzt und bei dieser Temperatur 3 h getempert.

### Beispiel 4: Herstellen eines porösen organischen Harzkörpers

Die Kompositmaterialien werden mit einer 20% Lösung von HF in Wasser bei 40°C 3 h behandelt.

### Beispiele 5 bis 11: Kationische Polymerisationen von 2,2'-Spirobi[4H-1,3,2-benzodioxasilin] zum Phenolharz/ Silica-Nanokomposit unter dem Einfluss der Katalysatoren Trifluoressigsäure (CF₃COOH) und Methansulfonsäure(CH₃SO₃H)

**Tabelle1:**

| Spiro/Kat^{[a]} | Reaktionsbedingungen | Reaktionszeit; Ergebnis |
|---|---|---|
| 25 - CH₃SO₃H | 25°C, 3.09 mol I⁻¹/CH₂Cl₂ | 60 sec; Polymerisation; rosa Feststoff |
| 50 - CH₃SO₃H | 25°C, 3.09 mol I⁻¹/CH₂Cl₂ | 5 min; inhomogener, teils transparenter Monolith |
| 25 - CH₃SO₃H^{[7]} | 0°C, 1.58mol I⁻¹/CH₂Cl₂ | 1 h, homogenes rosa Pulver |
| 10 - CF₃CO₂H | 85 °C Schmelze | 30 min -1 h; transparenter Monolith |
| 25 - CH₃SO₂H^{[9]} | 85 °C Schmelze | 2 h, transparenter Monolith |
| 5 - CF₃CO₂H | 25°C, 3.09 mol l⁻¹/CH₂Cl₂ | 1 Tag; transparenter Monolith |
| 50 - CF₃CO₂H | 25°C, 3.09 mol l⁻¹/CH₂Cl₂ | 1 Woche; unvollständige Umsetzung, viskos |

| | | |
|---|---|---|
| [a] molares Verhältnis Spiro-Verbindung : Katalysator [7], [9] im folgenden Text aufgeführte Beispiele 7 und 9 | | |

### Beispiel 7: Verhältnis Spiro-Verbindung : Kat → 25: 1

72.920 g (0.268 mol) 2,2'-Spirobi[4*H*-1,3,2-benzodioxasilin] wurden in 97 ml CH₂Cl₂ gelöst. 0.696 mL (1.029 g, 0.011 mol) CH₃SO₃H gelöst in 73 ml CH₂Cl₂ wurden bei 0 °C unter Rühren und Rückflusskühlung auf einmal zugegeben. Nach 60 min wurde nicht weiter gekühlt, es hat sich ein rosa Feststoff gebildet. Der Feststoff wurde anschließend im Vakuum bei 40 °C getrocknet.

### Beispiel 9: Verhältnis Spiro-Verbindung : Kat → 25: 1

14.856 g (0.055 mol) 2,2'-Spirobi[4*H*-1,3,2-benzodioxasilin] wurden bei 85°C geschmolzen und unter Rühren 0.167 mL (0.249 g, 0.0022 mol) CF₃CO₂H zugetropft. Es wurde noch 2 Stunden bei 85 °C erhitzt, aber bereits nach einer Stunde das Rühren eingestellt. Man erhält einen orangebraunen transparenten Monolith.

### Abbildungsverzeichnis

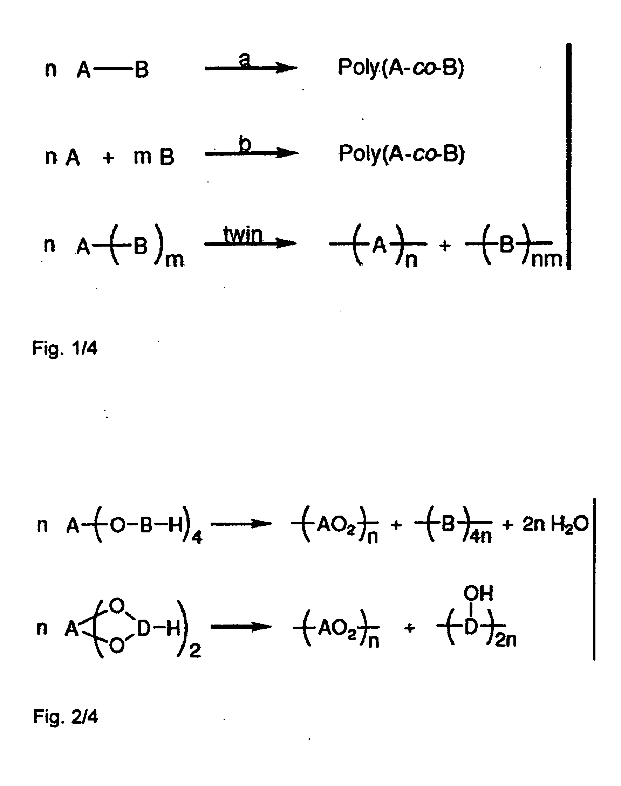

Fig. 1: die Schemata zeigen, dass klassische Copolymerisationen Copolymere liefern: a) unimolekular b) bimolekular. Bei der Zwillingspolymerisation (twin) als besondere Form der Copolymerisation bilden sich zeitgleich zwei Homopolymere (anorganisches Oxid und organisches Polymer). A = anorganische Komponente (Si, B, Ti,....) B = organische Komponente.
Fig. 2: zeigt Zwillingspolymerisationen des Typs TFOS und einer speziellen Spiroverbindung nach dem Konzept der erfindungsgemäßen Zwillingsringöffnungspolymerisation. Die organische Komponente D kann dabei zwei unterschiedlich gebundene Sauerstoff-Atome tragen, die zu einer unsymmetrischen Aufspaltung führen und ein OH-tragendes Polymer bilden. Wasserfreisetzende Kondensationsreaktionen werden so umgangen.
Fig. 3: zeigt die Synthese von SPISI durch Veresterung von Salicylalkohol mit Tetramethoxysilan.
Fig 4: zeigt die theoretische Bruttogleichung der erfindungsgemäßen Zwillingsringöffnungspolymerisation am Beispiel von 2,2'-Spirobi[4H-1,3,2-benzodioxasilin]. Zur Vereinfachung ist lediglich die Bildung eines linearen Polymers dargestellt. Bei der erfindungsgemäßen Polymerisationsreaktion entstehen jedoch Netzwerke.

## Patentansprüche

1. Spiroverbindung der allgemeinen Formel I 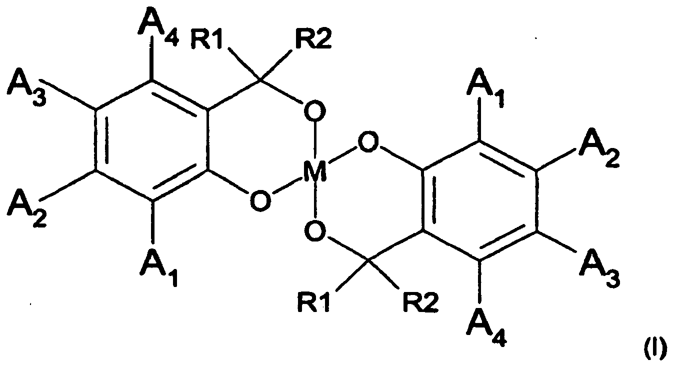 wobei
M ein Metall oder Halbmetall, vorzugsweise Si. Ti, Zr oder Hf, besonders bevorzugt Si oder Ti,
A₁, A₂, A₃, A₄ unabhängig voneinander Wasserstoff oder lineare oder verzweigte, aliphatische Kohlenwasserstoffreste, aromatische Kohlenwasserstoffreste oder aromatisch-aliphatische Kohlenwasserstoffreste
R₁, R₂ unabhängig voneinander Wasserstoff oder eine Alkylgruppe mit 1 bis 6 Kohlenstoffatomen, vorzugsweise Methyl oder H ist.

2. Spiroverbindung nach Anspruch 1, **dadurch gekennzeichnet, dass** mindestens zwei der Reste A₁, A₂, A₃ und A₄ untereinander verknüpft, insbesondere annelliert sind.

3. Spiroverbindung nach Anspruch 1 und/oder 2, **dadurch gekennzeichnet, dass** ein oder mehrere Kohlenstoffatome der Reste A₁, A₂, A₃ und A₄ unabhängig voneinander durch Heteroatome ersetzt sind, insbesondere durch O, S und/oder N.

4. Spiroverbindung nach einem oder mehreren der Ansprüche 1 bis 3,
**dadurch gekennzeichnet, dass** A₁, A₂, A₃ und A₄ unabhängig voneinander ein oder mehrere funktionelle Gruppen, insbesondere Halogen wie Br und Cl sowie CN und NR₂, wobei R insbesondere H oder ein aliphatischer oder aromatischer Kohlenwasserstoff, vorzugsweise H, Methyl, Ethyl oder Phenyl ist.

5. Spiroverbindung nach einem oder mehreren der Ansprüche 1 bis 4,
**dadurch gekennzeichnet, dass** R₁ und R₂ gleich H bedeutet.

6. Spiroverbindung nach einem oder mehreren der Ansprüche 1 bis 5,
**dadurch gekennzeichnet, dass** A1 und A3 gleich H, bevorzugt A1 bis A4 gleich H, bedeutet.

7. Anorganisch-organisches Hybridmaterial erhältlich durch kationische Polymerisation einer oder mehrerer Monomerbausteine ausgewählt aus der Gruppe der Spiroverbindungen der allgemeinen Formel I nach Anspruch 1 bis 6, wobei A₁ und A₃ gleich H ist und/oder Verbindungen der allgemeinen Formel II, 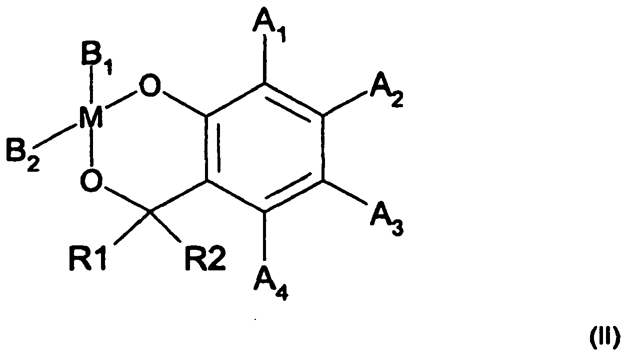 wobei
B₁, B₂ unabhängig voneinander lineare oder verzweigte aliphatische oder aromatische Kohlenwasserstoffreste sind, die Heteroatome, vorzugsweise O, N oder S enthalten können, wobei zwischen B₁ und B₂ Ringschlüsse über einen oder mehrere Kohlenstoff oder Heteroatome bestehen,
und M, A₁, A₂, A₃, A₄. R₁, R₂, die Bedeutungen gemäß einem oder mehreren der Ansprüche 1 bis 6 haben, wobei A₁ und A₃ gleich Wasserstoff ist.

8. Anorganisch-organisches Hybridmaterial nach Anspruch 7, **dadurch gekennzeichnet, dass** die Polymerisation eine Zwillingsringöffnungspolymerisation, ist.

9. Poröser oxidischer Monolith erhältlich aus dem anorganisch-organischen Hybridmaterial nach Anspruch 7 und/oder 8, wobei die organische Phase vollständig entfernt, vorzugsweise oxidiert, wird.

10. Poröser oxidischer Monolith nach Anspruch 9, **dadurch gekennzeichnet, dass** das Hybridmaterial ein anorganisches, poröses Metall- oder Halbmetalloxidgerüst und ein Polymer enthält.

11. Poröser oxidischer Monolith nach Anspruch 9 und/oder 10, **dadurch gekennzeichnet, dass** als Metall- oder Halbmetalloxid Siliciumdioxid/- hydroxid, Titandioxid/-hydroxid, Zirkoniumdioxid/-hydroxid oder Hafniumdioxid/-hydroxid eingesetzt wird.

12. Poröser oxidischer Monolith nach einem oder mehreren der Ansprüche 9 bis 11, **dadurch gekennzeichnet, dass** das Polymer ein Phenolharz ist.

13. Poröser organischer Harzkörper erhältlich aus dem anorganisch-organischen Hybridmaterial nach Anspruch 7 und/oder 8, indem die anorganische Phase vollständig entfernt wird.

14. Poröser organischer Harzkörper nach Anspruch 13, **dadurch gekennzeichnet, dass** das Hybridmaterial ein anorganisches, poröses Metall- oder Halbmetalloxidgerüst und ein Polymer enthält.

15. Poröser organischer Harzkörper nach Anspruch 13 und/oder 14,
**dadurch gekennzeichnet, dass** das Polymer ein Phenolharz ist.

16. Verfahren zur Herstellung von anorganisch-organischem Hybridmaterial durch Polymerisation eines oder mehrerer Monomerbausteine ausgewählt aus der Gruppe der Spiroverbindungen der allgemeinen Formel I nach einem oder mehreren der Ansprüche 1 bis 6 und/oder Verbindungen der allgemeinen Formel II nach Anspruch 7 und/oder 8.

17. Verfahren zur Herstellung von porösen oxidischen Monolithen umfassend die Stufen:
a) Herstellen eines Hybridmaterials durch Polymerisation eines oder mehrerer Monomerbausteine ausgewählt aus der Gruppe der Spiroverbindungen der allgemeinen Formel I nach einem oder mehreren der Ansprüche 1 bis 6 und/oder Verbindungen der allgemeinen Formel II nach Anspruch 7 und/oder 8.
b) Vollständiges Entfernen der organischen Phase.

18. Verfahren zur Herstellung von Spiroverbindungen der allgemeinen Formel I nach einem oder mehreren der Ansprüche 1 bis 6, **dadurch gekennzeichnet, dass** eine Verbindung der allgemeinen Formel III, 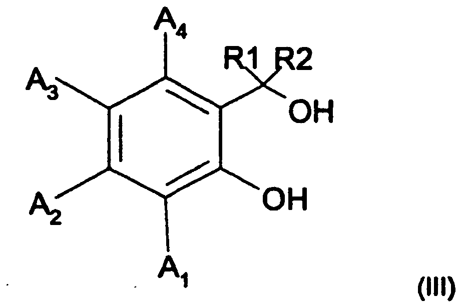 wobei A₁, A₂, A₃, A₄, R₁, R₂ die Bedeutungen gemäß einem der mehreren der Ansprüche 1 bis 6 haben und wobei A₁ und A₃ gleich H ist, mit mindestens einer Alkoxy- und/oder Halogenverbindung der Elemente Si, Ti, Zr oder Hf umgesetzt wird.

19. Verfahren nach Anspruch. 18, **dadurch gekennzeichnet, dass** als Alkylverbindungen Tetraalkylorthosilikate oder Tetraalkyltitanate eingesetzt werden.

20. Verfahren zur Herstellung von porösen organischen Harzkörpern umfassend die Stufen:
a) Herstellen eines Hybridmaterials durch Polymerisation eines oder mehrerer Monomerbestandteile ausgewählt aus der Gruppe der Spiroverbindungen der allgemeinen Formel I nach einem oder mehreren der Ansprüche 1 bis 6 und/oder Verbindungen der allgemeinen Formel II nach Anspruch 7 und/oder 8.
b) Vollständiges Entfernen der anorganischen Phase.

21. Verwendung von Spiro-Verbindungen der Formel I nach einem oder mehreren der Ansprüche 1 bis 6 und/oder Verbindungen der Formel II nach Anspruch 7 und/oder 8 zur Herstellung von porösen organischen Harzkörpern für den Einsatz als Katalysatorträger bzw. als Träger für Wirkstoffe

22. Verwendung von Spiro-Verbindungen der Formel I nach einem oder mehreren der Ansprüche 1 bis 6 und/oder Verbindungen der Formel II nach Anspruch 7 und/oder 8 zur Herstellung von porösen oxidischen Monolithen für den Einsatz als Katalysatorträger.

## Claims

1. A spiro compound of the general formula I 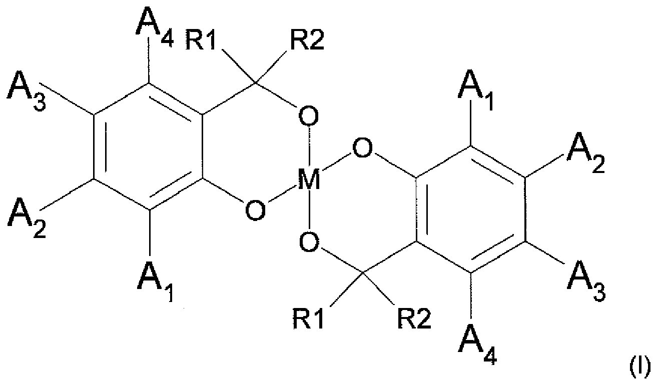 where
M is a metal or semimetal, preferably Si, Ti, Zr or Hf, particularly preferably Si or Ti,
A₁, A₂, A₃, A₄, independently of one another, are hydrogen or linear or branched, aliphatic hydrocarbon radicals, aromatic hydrocarbon radicals or aromatic-aliphatic hydrocarbon radicals,
R1, R2, independently of one another, are hydrogen or an alkyl group having 1 to 6 carbon atoms, preferably methyl or H.

2. The spiro compound according to claim 1, wherein at least two of the radicals A₁, A₂, A₃ and A₄ are linked to one another, in particular fused.

3. The spiro compound according to claim 1 and/or 2, wherein one or more carbon atoms of the radicals A₁, A₂, A₃ and A₄ have been replaced, independently of one another, by heteroatoms, in particular by O, S and/or N.

4. The spiro compound according to one or more of claims 1 to 3, wherein A₁, A₂, A₃ and A₄ contain, independently of one another, one or more functional groups, in particular halogen, such as Br and Cl, CN and NR₂, where R is, in particular, H or an aliphatic or aromatic hydrocarbon, preferably H, methyl, ethyl or phenyl.

5. The spiro compound according to one or more of claims 1 to 4, wherein R1 and R2 denote H.

6. The spiro compound according to one or more of claims 1 to 5, wherein A₁ and A₃ denote H, A₁ to A₄ preferably denote H.

7. An inorganic/organic hybrid material obtainable by cationic polymerization of one or more monomer units selected from the group of the spiro compounds of the general formula I according to claims 1 to 6, where A₁ and A₃ are equal to H, and/or compounds of the general formula II 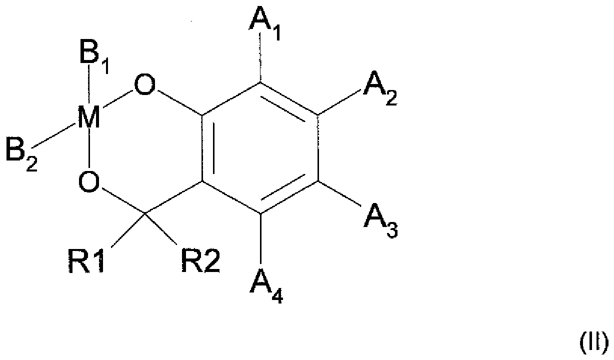 where
B₁, B₂, independently of one another, are linear or branched aliphatic or aromatic hydrocarbon radicals, which may comprise heteroatoms, preferably O, N or S, where ring closures exist between B₁ and B₂ via one or more carbon atoms or heteroatoms,
and M, A₁, A₂, A₃, A₄, R1, R2 have the meanings according to one or more of claims 1 to 6, where A₁ and A₃ are equal to hydrogen.

8. The inorganic/organic hybrid material according to claim 7, wherein the polymerization is a twin ring-opening polymerization.

9. A porous oxidic monolith obtainable from the inorganic/organic hybrid material according to claim 7 and/or 8, where the organic phase is removed completely, preferably oxidized.

10. The porous oxidic monolith according to claim 9, wherein the hybrid material comprises an inorganic, porous metal oxide or semimetal oxide framework and a polymer.

11. The porous oxidic monolith according to claim 9 and/or 10, wherein the metal oxide or semimetal oxide employed is silicon dioxide/hydroxide, titanium dioxide/hydroxide, zirconium dioxide/hydroxide or hafnium dioxide/hydroxide.

12. The porous oxidic monolith according to one or more of claims 9 to 11,
wherein the polymer is a phenolic resin.

13. A porous organic resin body obtainable from the inorganic/organic hybrid material according to claim 7 and/or 8 by completely removing the inorganic phase.

14. The porous organic resin body according to claim 13, wherein the hybrid material comprises an inorganic, porous metal oxide or semimetal oxide framework and a polymer.

15. The porous organic resin body according to claim 13 and/or 14, wherein the polymer is a phenolic resin.

16. A process for the preparation of inorganic/organic hybrid material by polymerization of one or more monomer units selected from the group of the spiro compounds of the general formula I according to one or more of claims 1 to 6 and/or compounds of the general formula II according to claim 7 and/or 8.

17. A process for the production of porous oxidic monoliths, comprising the steps of:
a) preparation of a hybrid material by polymerisation of one or more monomer units selected from the group of the spiro compounds of the general formula I according to one or more of claims 1 to 6 and/or compounds of the general formula II according to claim 7 and/or 8,
b) complete removal of the organic phase.

18. A process for the preparation of spiro compounds of the general formula I according to one or more of claims 1 to 6, wherein a compound of the general formula III 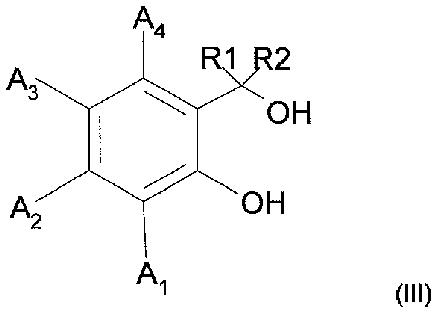 where A₁, A₂, A₃, A₄, R₁, R₂ have the meanings according to one or more of claims 1 to 6 and where A₁ and A₃ are equal to H, is reacted with at least one alkoxy and/or halogen compound of the elements Si, Ti, Zr or Hf.

19. The process according to claim 18, wherein the alkyl compounds employed are tetraalkyl orthosilicates or tetraalkyl titanates.

20. A process for the production of porous organic resin bodies, comprising the steps of:
a) preparation of a hybrid material by polymerization of one or more monomer constituents selected from the group of the spiro compounds of the general formula I according to one or more of claims 1 to 6 and/or compounds of the general formula II according to claim 7 and/or 8,
b) complete removal of the inorganic phase.

21. The use of spiro compounds of the formula I according to one or more of claims 1 to 6 and/or compounds of the formula II according to claim 7 and/or 8 for the production of porous organic resin bodies for use as catalyst supports or as supports for active compounds.

22. The use of spiro compounds of the formula I according to one or more of claims 1 to 6 and/or compounds of the formula II according to claim 7 and/or 8 for the production of porous oxidic monoliths for use as catalyst supports.

## Revendications

1. Composé spiro de formule générale I 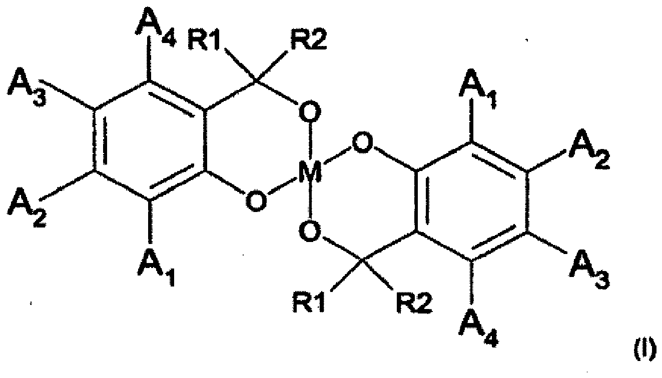 dans laquelle
M représente un métal ou un semi-métal, de préférence Si, Ti, Zr ou Hf, de marnière particulièrement préférée Si ou Ti,
A₁, A₂, A₃, A₄ représentent indépendamment les uns des autres l'hydrogène ou des radicaux hydrocarbonés aliphatiques linéaires ou ramifiés, des radicaux hydrocarbonés aromatiques ou des radicaux hydrocarbonés aromatiques-aliphatiques,
R₁, R₂ représentent indépendamment l'un de l'autre l'hydrogène ou un groupe alkyle de 1 à 6 atomes de carbone, de préférence méthyle ou H.

2. Composé spiro selon la revendication 1, **caractérisé en ce qu'**au moins deux des radicaux A₁, A₂, A₃ et A₄ sont reliés entre eux, notamment annelés.

3. Composé spiro selon la revendication 1 et/ou 2, **caractérisé en ce qu'**un ou plusieurs atomes de carbone des radicaux A₁, A₂, A₃ et A₄ sont remplacés indépendamment les uns des autres par des hétéroatomes, notamment par 0, S et/ou N.

4. Composé spiro selon une ou plusieurs des revendications 1 à 3, **caractérisé en ce qu'**A₁, A₂, A₃ et A₄ représentent indépendamment les uns des autres un ou plusieurs groupes fonctionnels, notamment halogène tel que Br et Cl, ainsi que CN et NR₂, R représentant notamment H ou un hydrocarbure aliphatique ou aromatique, de préférence H, méthyle, éthyle ou phényle.

5. Composé spiro selon une ou plusieurs des revendications 1 à 4, **caractérisé en ce que** R₁ et R₂ signifient H.

6. Composé spiro selon une ou plusieurs des revendications 1 à 5, **caractérisé en ce qu'**A1 et A3 signifient H, de préférence A1 à A4 signifient H.

7. Matériau hybride inorganique-organique pouvant être obtenu par polymérisation cationique d'un ou de plusieurs constituants monomères choisis dans le groupe des composés spiro de formule générale I selon les revendications 1 à 6, dans laquelle A₁ et A₃ signifient H, et/ou des composés de formule générale II 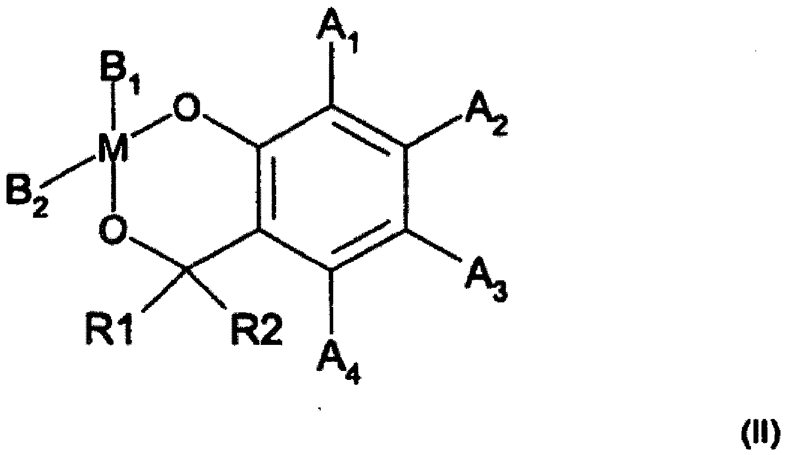 dans laquelle
B₁, B₂ représentent indépendamment l'un de l'autre des radicaux hydrocarbonés aliphatiques ou aromatiques, linéaires ou ramifiés, qui peuvent contenir des hétéroatomes, de préférence 0, N ou S, des fermetures de cycle par le biais d'un ou de plusieurs atomes de carbone ou hétéroatomes existant entre B₁ et B₂,
et M, A₁, A₂, A₃, A₄, R₁, R₂ ont les significations selon une ou plusieurs des revendications 1 à 6, A₁ et A₃ représentant l'hydrogène.

8. Matériau hybride inorganique-organique selon la revendication 7, **caractérisé en ce que** la polymérisation est une polymérisation par ouverture de cycles jumeaux.

9. Monolithe oxydique poreux pouvant être obtenu à partir du matériau hybride inorganique-organique selon la revendication 7 et/ou 8, la phase organique étant entièrement éliminée, de préférence oxydée.

10. Monolithe oxydique poreux selon la revendication 9, **caractérisé en ce que** le matériau hybride contient un squelette d'oxyde de métal ou de semi-métal poreux inorganique et un polymère.

11. Monolithe oxydique poreux selon la revendication 9 et/ou 10, **caractérisé en ce que** le dioxyde/hydroxyde de silicium, le dioxyde/hydroxyde de titane, le dioxyde/hydroxyde de zirconium ou le dioxyde/hydroxyde d'hafnium est utilisé en tant qu'oxyde de métal ou de semi-métal.

12. Monolithe oxydique poreux selon une ou plusieurs des revendications 9 à 11, **caractérisé en ce que** le polymère est une résine de phénol.

13. Corps résineux organique poreux pouvant être obtenu à partir du matériau hybride inorganique-organique selon la revendication 7 et/ou 8, par élimination complète de la phase inorganique.

14. Corps résineux organique poreux selon la revendication 13, **caractérisé en ce que** le matériau hybride contient un squelette d'oxyde de métal ou de semi-métal poreux inorganique et un polymère.

15. Corps résineux organique poreux selon la revendication 13 et/ou 14, **caractérisé en ce que** le polymère est une résine de phénol.

16. Procédé de fabrication d'un matériau hybride inorganique-organique par polymérisation d'un ou de plusieurs constituants monomères choisis dans le groupe des composés spiro de formule générale I selon une ou plusieurs des revendications 1 à 6, et/ou des composés de formule générale II selon la revendication 7 et/ou 8.

17. Procédé de fabrication de monolithes oxydiques poreux, comprenant les étapes suivantes :
a) la fabrication d'un matériau hybride par polymérisation d'un ou de plusieurs constituants monomères choisis dans le groupe des composés spiro de formule générale I selon une ou plusieurs des revendications 1 à 6, et/ou des composés de formule générale II selon la revendication 7 et/ou 8 ;
b) l'élimination complète de la phase organique.

18. Procédé de fabrication de composés spiro de formule générale I selon une ou plusieurs des revendications 1 à 6, **caractérisé en ce qu'**un composé de formule générale III 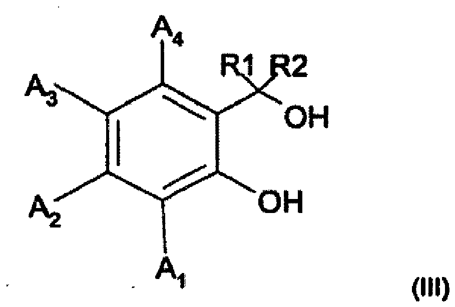 dans laquelle A₁, A₂, A₃, A₄, R₁, R₂ ont les significations selon une ou plusieurs des revendications 1 à 6, A₁ et A₃ signifiant H, est mis en réaction avec au moins un composé alcoxy et/ou halogéné des éléments Si, Ti, Zr ou Hf.

19. Procédé selon la revendication 18, **caractérisé en ce que** des orthosilicates de tétraalkyle ou des titanates de tétraalkyle sont utilisés en tant que composés d'alkyle.

20. Procédé de fabrication de corps résineux organiques poreux, comprenant les étapes suivantes .
a) la fabrication d'un matériau hybride par polymérisation d'un ou de plusieurs constituants monomères choisis dans le groupe des composés spiro de formule générale I selon une ou plusieurs des revendications 1 à 6, et/ou des composés de formule générale II selon la revendication 7 et/ou 8 ;
b) l'élimination complète de la phase inorganique.

21. Utilisation de composés spiro de formule I selon une ou plusieurs des revendications 1 à 6, et/ou de composés de formule II selon la revendication 7 et/ou 8 pour la fabrication de corps résineux organiques poreux destinés à être utilisés en tant que supports de catalyseur ou en tant que supports pour substances actives.

22. Utilisation de composés spiro de formule I selon une ou plusieurs des revendications 1 à 6, et/ou de composés de formule II selon la revendication 7 et/ou 8 pour la fabrication de monolithes oxydiques poreux destinés à être utilisés en tant que supports de catalyseur.
